(19) Europäisches Patentamt
European Patent Office
Office européen des brevets

(11) Publication number: **0 207 199 B1**

(12) **EUROPEAN PATENT SPECIFICATION**

(45) Date of publication of patent specification: **08.03.89**

(51) Int. Cl.[4]: **B 01 D 53/14**

(21) Application number: **85304512.8**

(22) Date of filing: **25.06.85**

(54) **Selective absorbtion of sulfur dioxide from gases containing sulfur dioxide and carbon dioxide.**

(43) Date of publication of application:
**07.01.87 Bulletin 87/02**

(45) Publication of the grant of the patent:
**08.03.89 Bulletin 89/10**

(84) Designated Contracting States:
**BE DE FR GB IT**

(56) References cited:
**US-A-3 856 921**
**US-A-4 100 256**
**US-A-4 112 049**
**US-A-4 374 653**

(73) Proprietor: **THE DOW CHEMICAL COMPANY**
**2030 Dow Center Abbott Road P.O. Box 1967**
**Midland Michigan 48640-1967 (US)**

(72) Inventor: **Fowler, Allan E.**
**52 Forest Court**
**Lake Jackson Texas 77566 (US)**

Inventor: **Jones, Mark B.**
**326 Live Oak Lane**
**Lake Jackson Texas 77566 (US)**

(74) Representative: **Burford, Anthony Frederick et al**
**W.H. Beck, Greener & Co. 7 Stone Buildings**
**Lincoln's Inn**
**London WC2A 3SZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 207 199 B1

## Description

The present invention concerns a process for selectively removing sulfur dioxide gas from a gas stream in the presence of carbon dioxide. The absorbent, which removes the sulfur dioxide, is regenerated thereby enabling its reuse and a continuous operation of the process.

Numerous patents and literature describe techniques for removing sulfur compounds from a gas stream containing the sulfur compounds. By far the most common technique is that used to treat natural gas having one or more of the acid gases, hydrogen sulfide ($H_2S$), sulfur dioxide ($SO_2$), carbonyl sulfide (COS), and carbon dioxide ($CO_2$) with an aqueous liquid lean (with repect to the acid gases) absorbent to produce a rich absorbent stream and regenerate the rich absorbent stream by thermal treatment to produce a recycleable lean stream. Many compounds have been suggested and used as the absorbent, some to selectively remove $H_2S$ or $CO_2$ and other absorbents more general in nature to remove as much of each of the acid gases present as is possible (US—A—4,112,049).

Now, with the renewed interest in coal fired boilers and the like, coupled with the greater concern for the environment, there is a need to provide a low pressure (at or below atmospheric), low temperature selective process to remove sulfur dioxide from the flue gases emitted from such plants without removal of any major portion of the carbon dioxide. A commercially desirable feature for the absorbent would be its regeneration from the absorbed gases enabling its reuse.

One process for removing the $SO_2$ widely in use today is the limestone scrubbing process. The disadvantage of this process is the formation of a large volume of solid waste, calcium sulfite-sulfate, often contaminated with fly ash, which requires disposal. In areas of the country where paper pulp operations are being carried out, the waste is oftentimes usable, but such situations are not widespread.

Another process recently in the forefront is the use of potassium or sodium citrate as disclosed in US—A—4,366,134. While the absorbent is regenerated and recycled, the make-up costs can be high due to thermally stable salts being formed. In addition, it is necessary to employ stainless steel for the entire plant to prevent excessive corrosion of the metals.

It would be advantageous to have a process which: (a) selectively absorbs sulfur dioxide to the exclusion of the other acid gases, particularly carbon dioxide; (b) has low chemical make-up cost; (c) has reduced operating costs; and (d) permits economical construction of equipment, to process low pressure, high volume, gas streams, such as flue gas, which results in the reduction or elimination of the sulfur dioxide content of such gases.

Surprisingly, the present process meets the above stated purposes. The process selectively removes sulfur dioxide from a gas stream containing sulfur dioxide and carbon dioxide by contacting the gas with an aqueous solution of a compound of the general formula

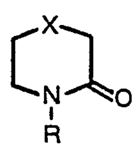

(I)

wherein X is a oxygen atom or NR′; R′ is a hydrogen atom or $C_1$—$C_5$ alkyl; and R is a hydrogen atom or $C_1$—$C_5$ alkyl.

The gas stream may also contain one or more of the other acid gases (for example, $H_2S$ or COS) commonly associated with hydrocarbon, natural or synthetic, and/or combustion gases (flue gas). The process employs a lean aqueous absorbent solution of a compound of Formula (I), preferably at a concentration of 0.1 molar to the saturation point. The rich absorbent, containing most of the $SO_2$ and little of the $CO_2$, is removed from the absorber (contactor) and thermally regenerated to produce a lean absorbent solution for recycle to the absorber.

The absorber is preferably operated at from 5° to 95°C under about atmospheric pressure conditions. Higher temperatures and pressures do not materially effect the process although equipment design may require modification to handle the higher temperatures and pressures.

The concentration of the sulfur dioxide in the gas streams may vary from about 10 ppm to about 45 percent by volume of the gas stream being treated.

The process for regeneration may be one of the conventional methods employed in conventional gas sweetening units as well as by stream stripping.

Brief description of the drawings

Figure 1 represents a schematic diagram of the essential components of a process used to treat gases in accordance with the present invention.

An integrated absorber-stripper (contactor-regenerator), as illustrated in Figure 1, was constructed by piping a ten tray Oldershaw column, 10, having a one inch (2.54 cm) internal diameter and $1\frac{1}{4}$ inch (3.17 cm) tray spacings in a manner to receive a lean absorbent solution at its upper end, 11, and a contaminated gas stream at its lower end, 12. The top, 13, and bottom, 14, were each independently piped to collect the treated gas at the top and the rich absorbent at the bottom, respectively. The rich absorbent was piped to a

shell and tube cooler, 15, which passed the hot lean absorbent on the shell side and the cool rich absorbent on the tube side. The rich absorbent was then delivered to the upper end, 16, of a stripper, 17. The stripper, 17, was a two-foot one-inch (0.635 m) internal diameter column packed with $\frac{1}{4}$ inch (6.35 mm) Berl saddles. The sulfur dioxide excited the top, 18, with some water vapor and was sent to a condenser, 19, wherein the water vapor was condensed and the condensate and sulfur dioxide sent to a degasifier, 20, from which the sulfur dioxide was vented and the condensate returned via pump, 20A, to the top, 18, of the stripper, 17, as reflux. The liquid collecting in the bottom, 21, of the stripper, 17, was substantially lean absorbent, a part of which was passed through a reboiler, 22, and back into the stripper below the packed section. The remainder of the lean absorbent collecting in the bottom 21, was piped to the cooler, 15, wherein it gave up most of its heat to the rich absorbent. The cool absorbent was drawn to the intake side of a pump, 23, passed through another cooler, 24, and then to the lean feed point of the absorber, 10.

To illustrate the present process, the following examples are provided.

Example 1

The data collected from several runs is set forth in the table below. The alphabetic headings refer to like alphabetically numerated streams in Figure 1.

TABLE I
lbs/hr (kg/hr)

| | | A | B | C | D | E | F | G | H |
|---|---|---|---|---|---|---|---|---|---|
| | Mole Wt | Feed Gas | Treated Gas | Lean Soln | Rich Soln | Lean Soln | Acid Gas/Water | Condensate | Acid Gas |
| $H_2O$ | 18.0 | | | 0.63 (0.285) | 0.63 (0.285) | 0.63 (0.285) | 0.65 (0.295) | 0.65 (0.295) | 0.001 (0.0005) |
| $CO_2$ | 44.0 | 0.1908* (0.08655) | 0.1908 (0.08655) | | | | | | |
| $N_2$ | 28.17 | 0.7105 (0.3223) | 0.7105 (0.3223) | | | | | | |
| $O_2$ | 32.0 | | | | | | | | |
| $SO_2$ | 64.06 | 0.014 (0.0065) | 3 ppm $6.6 \times 10^{-6}$ $(3.0 \times 10^{-6})$ | 0.0045 (0.0020) | 0.0185 (0.0085) | 0.0045 (0.0020) | 0.014 (0.0065) | | 0.014 (0.0065) |
| $SO_3$ | 80.06 | | | | | | | | |
| NNDP** | 128.17 | | | 0.03 (0.015) | 0.03 (0.015) | 0.03 (0.015) | | | |
| | | 0.9153 (0.4152) | 0.901 (0.409) | 0.665 (0.302) | 0.6785 (0.308) | 0.665 (0.302) | 0.664 (0.301) | 0.65 (0.295) | 0.015 (0.007) |

* Numbers were normalized to Balance
** N,N'methylpiperazinone (or 1,4-dimethylpiperazinone)

Example 2

A series of tests were run to screen the efficiency of various compounds known to absorb $SO_2$ with respect to their absorbent characteristic for $CO_2$. The equipment, a steel bomb filled with glass balls, was fitted with a valve at one end through which $CO_2$ and absorbent could be added. The bomb was also fitted with a pressure sensing instrument. The bomb was pressurized to 760 mm Hg with $CO_2$ and filled with a measured quantity of a 1 molar solution of a specific absorbent. The bomb was then left at ambient temperature (about 24°C) or heated as indicated in the table below, and the pressure drop measured over a 10 minute period for each condition. The results were as follows:

TABLE II

| Absorbant | Cell Temp. °C | Mols $CO_2$/ Mol Absorbant |
|---|---|---|
| Water | 24 | 0.046 |
| 1 M triethanolamine | 24 | 0.27 |
| | 50 | none[1] |
| 1 M 1,4-dimethylpiperazinone | 23 | 0.08 |
| | 75 | none |
| 1 M triethylene glycol | 24 | none[2] |
| 1 M neutralized citric acid | 24 | none[3] |
| 1 M DETA[4] | 24 | 1.33 |
| | 65 | 0.95 |
| | 74 | 0.76 |
| 1 M $Na_2SO_3$ | 24 | 0.17 |
| | 44 | 0.16 |
| | 74 | 0.1 |

[1] High losses due to high vapor pressure.
[2] Degrades in presence of oxygen.
[3] Solvent used in US—A—4,366,134, corrosive.
[4] Diethylenetriamine

Example 3

Using the ten tray Oldershaw column described previously various compounds were tested for $CO_2$ and $SO_2$ absorption characteristics. A synthetic $N_2/CO_2/SO_2$ gas mixture of the composition set forth in the following table was fed to the bottom of the column at 55°C and 4/5 liters/minute. The liquid flow at the top was about 10 cc/minute. The analysis of the gas in and out was obtained and weight percent $CO_2$ and/or $SO_2$ absorbed calculated. The results are set forth below.

TABLE III

| | ABSORPTION STUDIES | | | | | | | |
|---|---|---|---|---|---|---|---|---|
| | WT. % GAS IN FEED | | | WT. % GAS OUT | | | % ABSORBED | |
| COMPOUND | $N_2$ | $CO_2$ | $SO_2$ | $N_2$ | $CO_2$ | $SO_2$ | $CO_2$ | $SO_2$ |
| WATER | 78.78 | 19.85 | 1.43 | 79.56 | 19.27 | 1.15 | 3.8 | 19.5 |
| NNDP | 79.01 | 19.97 | 1.02 | 79.58 | 20.41 | — | — | 100 |
| | 74.27 | 17.60 | 8.13 | 80.69 | 19.31 | — | — | 100 |
| DETA | 73.86 | 17.94 | 8.19 | 83.82 | 16.17 | — | 20.58 | 100 |
| K CITRATE | 74.44 | 17.74 | 7.82 | 79.83 | 20.17 | — | — | 100 |
| | 69.23 | 16.86 | 13.91 | 80.23 | 19.77 | — | — | 100 |
| -pyrrole | 78.36 | 20.19 | 1.43 | 78.62 | 19.90 | 1.32 | 1.47 | 7.7 |
| N,N′-Dimethyl-piperazine | 79.01 | 19.51 | 1.48 | 79.76 | 20.24 | trace | — | 99 |
| Morpholine | 78.16 | 20.39 | 1.45 | 79.78 | 20.22 | trace | — | 99 |
| Tetramethylene sulfone | 78.22 | 20.15 | 1.63 | 77.94 | 19.95 | 1.35 | 2.65 | 17.2 |
| Aminoethylpiper-azine +3PO | 77.95 | 20.44 | 1.61 | 78.97 | 21.03 | — | — | 100 |

TABLE IV

$SO_2$ ABSORPTION; 20 WT% NNDP; HIGH $SO_2$ LOADING

5 cc/min Liquid Feed; 781 mm Hg Pressure Absolute, ca 0.195 $ft^3/min$[1] gas in and 0.184 $ft^3/min$[2] gas out

| | | | |
|---|---|---|---|
| Temperature °C | | | |
| Absorbent Feed In | 56 | 56 | 57 |
| Gas Feed In | 25 | 25 | 25 |
| Wt. % Gas In | | | |
| $N_2$ | 77.17 | 75.18 | 73.27 |
| $CO_2$ | 19.65 | 19.70 | 19.00 |
| $SO_2$ | 3.18 | 5.12 | 7.73 |
| Wt. % Gas Out | | | |
| $N_2$ | 79.78 | 80.35 | 78.97 |
| $CO_2$ | 20.52 | 19.65 | 20.76 |
| $SO_2$ | .001 | .001 | .269 |
| ppm $SO_2$ by Dräger | 10 | 10 | too high to measure |

This run established that NNDP will absorb in excess of one mol of $SO_2$ per mol of NNDP.

STRIPPER

4 cc/min Liquid Feed; 761 mm Hg Pressure Absolute Wt% $SO_2$

| | | | | |
|---|---|---|---|---|
| Wt% $SO_2$ | | | | |
| Liq (in) | 7.5 | 7.5 | 7.5 | 7.5 |
| Liq (out) | 2.38 | 2.29 | 2.14 | 2.03 |
| Temperatures, °C | | | | |
| Feed In | 81 | 81 | 82 | 82 |
| Bottoms | 104 | 104 | 104 | 103 |

[1] 0.0055 $m^3/min$

[2] 0.0052 $m^3/min$

TABLE V

$SO_2$ ABSORPTION; 20 WT% NNDP

5 cc/min Liquid Feed; 781 mm Hg Pressure

Cu ft/min ($m^3/min$)

| | | | | |
|---|---|---|---|---|
| In | 0.173 (0.00490) | 0.176 (0.00499) | 0.176 (0.00499) | 0.177 (0.00501) |
| Out | 0.169 (0.00479) | 0.175 (0.00496) | 0.175 (0.00496) | 0.176 (0.00499) |
| Temperatures °C | | | | |
| Liquid Feed | | | | |
| At Inlet | 85 | 81 | 80 | 80 |
| Top of Column | 56 | 55 | 54 | 55 |
| Gas in | | | | |
| Bottom of Column | 25 | 24 | 21 | 22 |
| Wt. % Gas In | | | | |
| $N_2$ | 77.83 | 78.11 | 77.85 | 77.68 |
| $CO^2$ | 20.56 | 20.27 | 20.66 | 20.75 |
| $SO_2$ | 1.61 | 1.62 | 1.50 | 1.58 |

TABLE V (continued)

| | | | | |
|---|---|---|---|---|
| Wt. % Gas Out | | | | |
| $N_2$ | 79.10 | 79.40 | 79.03 | 78.92 |
| $CO_2$ | 20.90 | 20.60 | 20.97 | 21.08 |
| $SO_2$ | too low to measure | | | |
| ppm $SO_2$ by Dräger | 8 | 8 | 10 | 2 |
| STRIPPER | | | | |
| 761 mm Hg Pressure | | | | |
| cc/min Liquid Feed | 4 | 4 | 5 | 3 |
| Wt% $SO_2$ | | | | |
| Liq (in) | 3.12 | 3.09 | 1.80 | 1.87 |
| Liq (out) | 1.52 | 1.67 | 1.44 | 1.42 |
| Temperatures, °C | | | | |
| Feed In | 84 | 84 | 80 | 90 |
| Bottoms | 100 | 102 | 102 | 101 |

TABLE VI

$SO_2$ ABSORPTION; 20 WT% NNDP
5 cc/min Liquid Feed; 781 mm Hg Pressure
Cu ft/min ($m^3$/min)

| | | | | |
|---|---|---|---|---|
| In | 0.195 (0.00552) | 0.195 (0.00552) | 0.195 (0.00552) | 0.195 (0.00552) |
| Out | 0.184 (0.00521) | 0.184 (0.00521) | 0.184 (0.00521) | 0.184 (0.00521) |
| Temperatures °C | | | | |
| Liquid Feed | | | | |
| At Inlet | 80 | 80 | 80 | 80 |
| At top of Column | 55 | 55 | 55 | 55 |
| Gas | | | | |
| Bottom of Column | 21 | 22 | 22 | 21 |
| Wt. % Gas In | | | | |
| $N_2$ | 78.41 | 78.93 | 77.27 | 78.41 |
| $CO^2$ | 19.97 | 19.55 | 21.11 | 19.97 |
| $SO_2$ | 1.62 | 1.51 | 1.61 | 1.62 |
| Wt. % Gas Out | | | | |
| $N_2$ | 78.53 | 80.15 | 78.54 | 79.70 |
| $CO_2$ | 21.47 | 19.85 | 21.46 | 20.30 |
| $SO_2$ | .0003 | .0008 | .0003 | .000 |
| ppm $SO_2$ by Dräger | 3 | 8 | 3 | 3 |
| STRIPPER | | | | |
| 4 cc/min Liquid Feed; 761 mm Hg Pressure | | | | |
| Wt% $SO_2$ | | | | |
| Liq (in) | 2.94 | 2.72 | 2.74 | 2.74 |
| Liq (out) | 0.72 | 0.72 | 0.82 | 0.72 |
| Temperatures, °C | | | | |
| Feed In | 80 | 86 | 87 | 87 |
| Bottoms | 102 | 103 | 102 | 102 |

These two runs establish that $SO_2$ will be absorbed selectively vis-a-vis $CO_2$ at temperatures above 50°C, the normal water/gas wash temperature, at 5 percent concentration as well as 20 percent concentration.

Example 4

In another series of test runs, a 10 percent by weight aqueous solution of 1-methyl-2-morpholinone in deionized water was passed down a $\frac{1}{2}$" × 2 ft. (1.27 cm × 0.61 m) good (low) packed absorber column at a nominal rate of −5 cc per minute while a mixture of 3.17 liters per minute of $N_2$, 1.2 ton/min. (1,100 kg/min) of air, 750 cc/min of $CO_2$ and 70 cc/min of $SO_2$ representing 1 percent by weight of $SO_2$ were fed to the bottom of the column. The liquid withdrawn from the bottom of the column was fed to a $\frac{1}{2}$" × 2 ft (1.27 cm × 0,61 m) ss stripper column packed with $\frac{1}{4}$" (0.6 cm) Berl saddles with a heated bath reboiler.

The off gas from the absorber contained 0.45 percent by weight $SO_2$ and the absorber liquid contained 0.63 percent by weight $SO_2$ of which 96.8 percent was stripped from the absorbent in the stripper column. This represents a pick-up of $\frac{1}{2}$ mole per mole of 1-methyl-2-morpholinone vs a 10 percent solution, and the ability to regenerate the absorbent for recycle.

**Claims**

1. A process for selectively removing sulfur dioxide from a gas stream containing sulfur dioxide and carbon dioxide which comprises contacting the gas with an absorbent, characterised in that the absorbent is an aqueous solution of a compound of the general formula

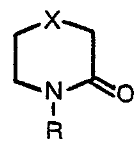

(I)

wherein X is a oxygen atom or NR'; R' is a hydrogen atom or $C_1$—$C_5$ alkyl; and R is a hydrogen atom or $C_1$—$C_5$ alkyl.

2. A process as claimed in Claim 1, wherein X is oxygen.

3. A process as claimed in Claim 1, wherein X is NR'.

4. A process as claimed in any one of the preceding claims, wherein R and, if present, R' are both $C_1$—$C_5$ alkyl.

5. A process as claimed in Claim 4, wherein compound of Formula (I) is 1,4-dimethylpiperazinone.

6. A process as claimed in Claim 4, wherein the compound of Formula I is 1-methyl-2-morpholinone.

7. A process as claimed in any one of the preceding claims, wherein the process is continuous.

8. A process as claimed in any one of the preceding claims, which comprises the further step of regeneration of the aqueous solution of a compound of Formula I

9. A process as claimed in any one of the preceding claims, which comprises the further step of recovering the gas, substantially free of sulfur dioxide, from the aqueous solution.

**Patentansprüche**

1. Verfahren zum selektiven Entfernen von Schwefeldioxid aus einem Schwefeldioxid und Kohlendioxid enthaltenden Gasstrom, umfassend das Inkontaktbringen des Gases mit einem Absorbens, dadurch gekennzeichnet, daß das Absorbens eine wäßrige Lösung einer Verbindung der allgemeinen Formel I ist,

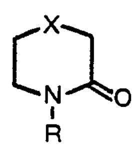

(I)

wobei X ein Sauerstroffatom oder NR' ist und R' ein Wasserstoffatom oder ein $C_1$—$C_5$-Alkyl ist und R ein Wasserstoffatom oder eine $C_1$—$C_5$-Alkylgruppe darstellt.

2. Verfahren nach Anspruch 1, dadurch gekennzeichnet, daß X ein sauerstoffatom ist.

3. Verfahren nach Anspruch 1, dadurch gekennzeichnet, daß X gleich NR' ist.

4. Verfahren nach einem der vorhergehenden Ansprüche, dadurch gekennzeichnet, daß R und, sofern vorhanden, R' eine $C_1$—$C_5$-Alkylgruppe darstellt.

5. Verfahren nach Anspruch 4, dadurch gekennzeichnet, daß die Verbindung der Formel I 1,4-Dimethylpiperazinon ist.

6. Verfahren nach Anspruch 4, dadurch gekennzeichnet, daß die Verbindung der Formel I 1-Methyl-2-morpholinon ist.

7. Verfahren nach einem der vorhergehenden Ansprüche, dadurch gekennzeichnet, daß das Verfahren kontinuierlich durchgeführt wird.

8. Verfahren nach einem der vorhergehenden Ansprüche, dadurch gekennzeichnet, daß es eine weitere Stufe zur Wiedergewinnung der wäßrigen Lösung einer Verbindung der Formel I umfaßt.

9. Verfahren nach einem der vorhergehenden Ansprüche, dadurch gekennzeichnet, daß es eine weitere Stufe zur Wiedergewinnung des im wesentlichen schwefeldioxidfreien Gases aus der wäßrigen Lösung umfaßt.

## Revendications

1. Procédé d'élimination sélective de dioxyde de soufre hors d'un courant gazeux contenant du dioxyde de soufre et du dioxyde de carbone, qui comprend la mise en contact du gaz avec un absorbant, caractérisé en ce que l'absorbant est une solution aqueous d'un composé de formule générale:

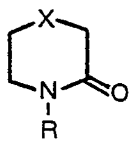

(I)

dans laquelle X est un atome d'oxygène ou le groupe NR';
R' est un atome d'hydrogène ou un groupe alkyle en $C_{1-5}$; et R est un atome d'hydrogène ou un groupe alkyle en $C_{1-5}$.

2. Procédé selon la revendication 1, dans lequel X est un atome d'oxygène.

3. Procédé selon la revendication 1, dans lequel X est NR'.

4. Procédé selon l'une quelconque des revendications précédentes, dans lequel R et R' (s'il est présent) sont tous deux des groupes alkyle en $C_{1-5}$.

5. Procédé selon la revendication 4, dans lequel le composé de formule (I) est la 1,4-diméthylpipérazinone.

6. Procédé selon la revendication 4, dans lequel le composé de formule (I) est la 1-méthyl-2-morpholinone.

7. Procédé selon l'une quelconque des revendications précédentes, dans lequel le procédé est continu.

8. Procédé selon l'une quelconque des revendications précédentes, qui comporte l'étape supplémentaire de régénération de la solution aqueuse d'un composé de formule (I).

9. Procédé selon l'une quelconque des revendications précédentes, qui comporte l'étape supplémentaire de récupération du gaz, sensiblement exempt de dioxyde de soufre à partir de la solution aqueuse.

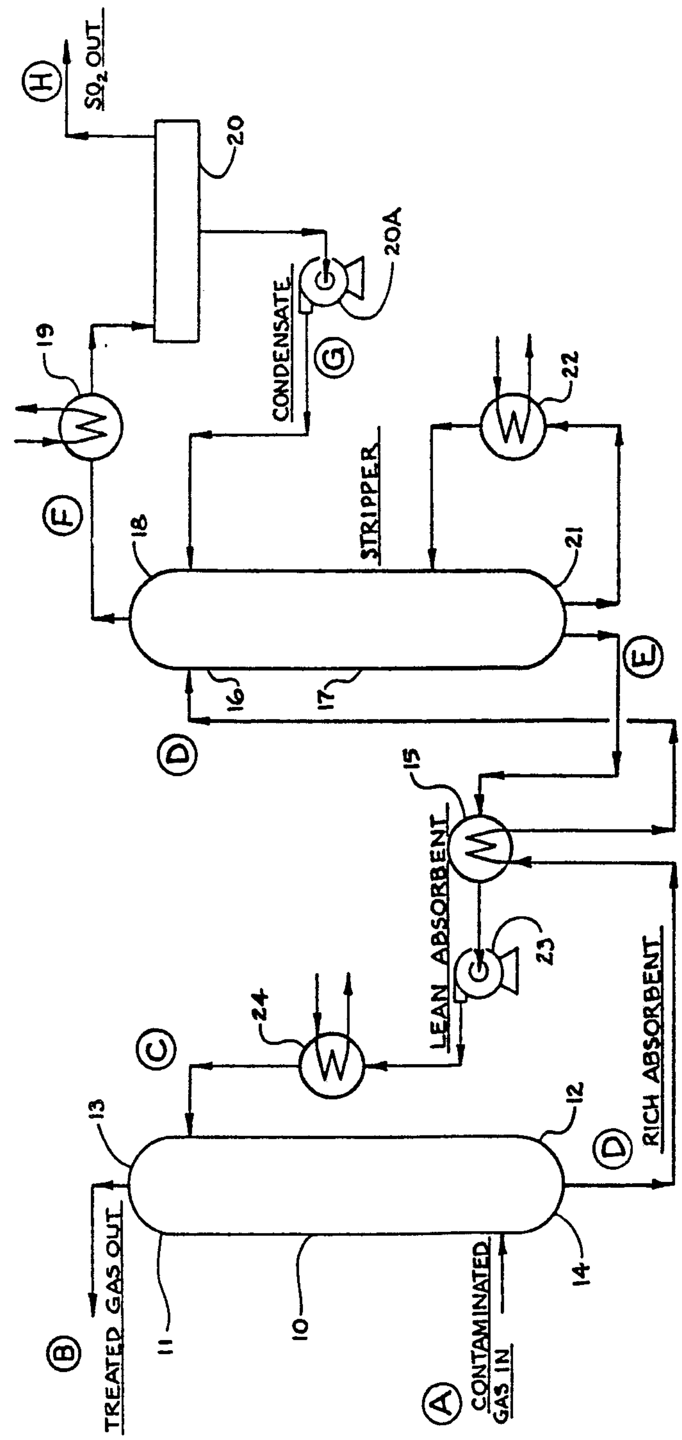
SO$_2$ OUT
H
20
20A
CONDENSATE
G
19
F
18
STRIPPER
22
21
E
16
17
D
15
LEAN ABSORBENT
23
24
C
13
12
D
RICH ABSORBENT
B
TREATED GAS OUT
11
10
A
CONTAMINATED GAS IN
14

FIG.1